# EUROPEAN PATENT SPECIFICATION

(11) **EP 3 268 821 B1**
(45) Date of publication and mention of the grant of the patent: **15.07.2020**
(21) Application number: 16719557.7
(22) Date of filing: 29.02.2016
(51) Int. Cl.: G05B 15/02, G06Q 10/10, G06Q 10/04, G06Q 50/16

(54) **CASCADED IDENTIFICATION IN BUILDING AUTOMATION**
KASKADIERTE IDENTIFIZIERUNG IN GEBÄUDEAUTOMATION
IDENTIFICATION EN CASCADE EN IMMOTIQUE

(30) Priority: 11.03.2015 US 201562131749 P
(43) Date of publication of application: 17.01.2018
(73) Proprietor: Siemens Industry, Inc., Alpharetta, GA 30005 (US)
(72) Inventor: AHMED, Osman, Hawthorn Woods, Illinois 60047 (US)
(74) Representative: Isarpatent
(86) International application number: PCT/US2016/020028
(87) International publication number: WO 2016/144587

(56) References cited:
- US-A1- 2011 166 913
- US-A1- 2013 030 875
- US-A1- 2015 046 233

## Description

### CROSS-REFERENCE TO OTHER APPLICATION

This application claims the benefit of the filing date of United States Provisional Patent Application 62/131,749, filed March 11, 2015.

### TECHNICAL FIELD

The present embodiments relate generally to building automation systems.

### BACKGROUND

Building automation systems include heating, ventilation and air conditioning (HVAC) systems, security systems, fire systems, or other systems. The systems are typically formed from distributed components wired together. HVAC systems may be formed with one, two, or three separate tiers or architectural levels. In a three-tier system, a floor level network provides general control for a particular floor or zone of a building. Controllers of the floor level network provide process controls based on sensor inputs to operate actuators. For example, an adjustment of a damper, heating element, cooling element, or other actuator is determined based on a set point and a measured temperature. Other control functions may be provided. The building level network integrates multiple floor level networks to provide consistent control between various zones within a building. Panels or other controllers control distribution systems, such as pumps, fans or other central plants for cooling and heating. Building level controllers may communicate among themselves and access floor level controllers for obtaining data. The management level network integrates control of the building level networks to provide a high-level control process of the overall building environment and equipment.

Each building is run separately. Data from the different levels is used to identify faults or diagnose problems for a given building. This data for a given building may not accurately reflect a problem or the influence of the building automation on a business. Prior art document US2015/0046233-A1 discloses a computer implemented method and system for providing to a manager the effectiveness of an entity by analysing emails, social network, CRM, calendar data, typing speed by using machine learning processes. Prior art document US2013/0030875-A1 discloses a method of notifying a user of site abnormalities via an application configured to access an event server having abnormality detectors connected to sensors.

### SUMMARY

Data from many buildings is used to machine train a cascade of classifiers. The cascade learns to classify in layers that relate to each other. One classifier identifies one characteristic and the other classifier uses the identified characteristic to identify another characteristic. For example, a cascade learns to classify buildings, efficiency, or cost associated with particular building automation systems (e.g., building A has increased heating cost), to classify the fault leading to the cost (e.g., hot water supply temperature causes increased cost), and to classify the source of the fault (e.g., valve position or valve) in a cascade. The resulting machine-learnt cascade is applied to data for any number of buildings. One or more classifiers uses the output from another classifier of the cascade in a cascade arrangement.

In one aspect, a method of building automation is provided with cascaded learning in a building management system. First data related to a plurality of buildings is accessed by a building analytics system of the building management system. The first data includes building management system data and enterprise data different than building management system data. The enterprise data is for an enterprise associated with the buildings of the plurality, and the building management system data is for the buildings of the plurality. The building analytics system applies the first data to a first machine learning for identifying cost information, applies the first data to a second machine learning for identifying a fault associated with the cost information, and applies the first data to a third machine learning for identifying a source of the fault. A cascade system comprising first, second, and third machine-learnt classifiers from the first, second, and third learning is output as a result of the application.

In a second aspect, a building management system is provided for building automation fault detection. A building automation system for heating, ventilation, and air conditioning for a building is configured to output operational data. A building processor is configured to apply the operational data to a cascade of first and second machine-learnt classifiers. The first machine-learnt classifier is configured to identify a fault in the building automation system, and the second machine-learnt classifier is configured to identify a source of the fault. The first and second machine-learnt classifiers of the cascade are trained from building automation systems of multiple other buildings. A display is configured to output the source.

In a third aspect, a method is provided for building automation analysis in a building management system. A building analytics system of the building management system accesses data related to operation a first building automation system. A cascade of at least first and second machine-learnt classifiers classifies the first building automation system. The second machine-learnt classifier is responsive to a classification of the first machine-learnt classifier. The first and second machine-learnt classifiers are trained from data related to operation of a plurality of second building automation systems. Results of the classifying are presented on a display of the building analytics system.

In a fourth aspect, a method is provided for building automation with cascaded learning in a building management system. A building analytics system of the building management system accesses first, second, and third data related to a plurality of buildings. The first data is building level data, the second data is system level data, and the third data is component level data. The building analytics system applies the first data to a first machine learning for identifying a building level variable. The building analytics system applies the second data to a second machine learning for identifying a source of a fault represented in the building level variable. The building analytics system applies the third data to a third machine learning for identifying the fault. As a result of the applying, a cascade system including first, second, and third machine-learnt classifiers from the first, second, and third learning is output.

Other systems, methods, and/or features of the present embodiments will become apparent to one with skill in the art upon examination of the following FIGS. and detailed description. It is intended that all such additional systems, methods, features, and advantages be included within this description, be within the scope of the invention, and be protected by the accompanying claims. Additional features of the disclosed embodiments are described in, and will be apparent from, the following detailed description and the FIGS.

### BRIEF DESCRIPTION OF THE FIGURES

The components in the FIGS. are not necessarily to scale, emphasis instead being placed upon illustrating the principles of the embodiments. In the FIGS., like reference numerals designate corresponding parts throughout the different views.
FIG. 1 is a block diagram of one embodiment of a management system for building automation prediction within an enterprise;
FIG. 2 illustrates an example building automation system that may be employed in the management system;
FIG. 3 illustrates an example distinction between building level and enterprise level analytics employed by a building analytics system of the management system;
FIG. 4 shows one embodiment of building level analysis employed by the building analytics system;
FIG. 5 shows an embodiment of enterprise level analysis employed by the building analytics system;
FIG. 6 illustrates example degradation of a damper in a building automation system;
FIG. 7 illustrates example degradation of a valve in a building automation system;
FIG. 8 illustrates training and operation of a machine-learnt predictor employed by the building analytics system;
FIG. 9 is a flow diagram of one embodiment for machine learning as a precursor to prediction employed by the building analytics system;
FIG. 10 illustrates cascaded learning for building automation according to one embodiment employed by the building analytics system;
FIG. 11 illustrates application of a cascade of classifiers according to one embodiment employed by the building analytics system;
FIGS. 12A and 12B show example clustering with case based reasoning employed by the building analytics system;
FIG. 13 illustrates one embodiment of cluster analysis using enterprise data employed by the building analytics system;
FIG. 14 is an example data representation for cluster analysis at an enterprise level provided by the building analytics system;
FIG. 15 is one embodiment of a block diagram representing machine learning using enterprise data employed by the building analytics system;
FIG. 16 is an embodiment of a block diagram of use of machine learning employed by the building analytics system to control building automation systems within the enterprise; and
FIG. 17 is a flow chart diagram of one embodiment of a method employed by the building analytics system in the management system for building automation prediction.

### DETAILED DESCRIPTION

Analytics are used in building automation. Embodiments disclosed herein provide improvements for building automation systems employing analytics. Analytics is the systematic use of physical data and related business insights developed through applied analytical disciplines (e.g. statistical, contextual, quantitative, predictive, cognitive, or other emerging models) to drive fact-based decision making for planning, management, measurement, and learning. Analytics may be descriptive, predictive, or prescriptive. For a non-building automation system example, a system may use Twitter data to accurately predict rates of heart disease by region (e.g., county). The data analytics from twitter information mirrors heart disease rates from death certificates.

For building automation, performance analytics are applied within a single building and all its systems. Big data analytics are applied across multiple buildings that belong to and/or are controlled by a given enterprise, such as a company or government entity. For example, the operation of tens or hundreds of branches, franchises, or facilities are analyzed. The analytics are designed to detect operational performance deficiency, such as fault detection and diagnostics-proactively and adaptively. At an enterprise level, performance analytics a particular the building automation system and big data analytics of the enterprise in which the building automation systems are employed are combined by a management system operable to analyze and perform processes based on the combination as further described herein.. Customers or others using data analytics in building automation may benefit. A management system employing the analytics processes and structures as described herein may be used to provide a safe, comfortable, and productive environment. Service interruptions, breakdowns, and turndown time may be reduced or avoided. Cost of ownership may be reduced, and equipment and/or systems service life may be increased. By analyzing at an enterprise level (e.g., multiple buildings), in accordance with processes employed in the embodiments of management systems disclosed herein, the focus for an enterprise or company shifts from repair and maintenance to prevention and prediction. Overall operating expense, operating expenditure, operational expense, operational expenditure (OPEX) may be reduced, allowing better utilization of capital expenditure (CAPEX).

Using machine learning, data from multiple buildings and/or meta data from the enterprise are used to create a classifier for analysis of building automation systems employed in the buildings. The machine learning is driven by data, so is suitable for big data or enterprise level building management. Rather than applying a programmed algorithm that may not be suitable for some situations, a more robust machine-trained classifier is used. The machine training is adaptable and able to automatically classify despite the volume and complexity of data. Cascade learning and resulting cascade classification may provide accurate classification tunneling down to the cause of problems in building automation systems of the buildings. For example, a device or setting causing fault that results in increased cost for a particular building may be identified from a cascade of machine-learnt classifiers. One machine-learnt classifier uses the output from another in a cascade arrangement in a building analytics system. One or more classifiers of the cascade are trained to identify information used by another classifier. The cascade traverses from more general to specific, from one type to another, or across other distinctions where different classifiers are trained for the different distinctions.

In one example, an enterprise owns 500 buildings that are located throughout USA and Canada. In an effort to reduce energy cost, data from 500 buildings is utilized in a machine-learning platform of a building analytics system. The machine-learning platform includes a cascade of back-propagation and cerebellar model arithmetic computer (CMAC) neural network learning. High-level problems, such as energy consumption or overall efficiency, are addressed by back-propagation learning. The high-level problem is cascaded into a specific issue, such as a sensor or valve in CMAC learning. The physical topology of the heating, ventilation, air conditioning (HVAC) system is utilized in that building energy is related to primary consumers such as heating, cooling, ventilation, or energy usage. The primary consumers may be classified by primary equipment, such as boiler, in a cascade from identifying the primary consumer. The primary equipment is connected to air or water distribution systems, and that air distribution system relies on sensor values and/or actuator settings, and so on and so forth. The cascade of the building analytics system may classify over any level and/or range of generalization, such as classifying the primary consumer associated with a building, classifying the primary equipment using the identified primary consumer, and then classifying the variables or devices of the primary equipment using the identified primary equipment. The analysis may yield substantial savings for the enterprise because of reduction in heating cost where the reduction opportunity is identified by the cascade.

Since machine learning is used, large amounts of data from many buildings may be used to relate the input information to the desired output. Machine learning allows handling of large and complex data that a program or manual review may not be able to handle. By cascading the high-level problem into a specific issue, such as sensor or valve, specific problems associated with problems are identified quickly using analytics. For example, heating cost is reduced by fixing an outside damper and a heating valve. The increased heating cost is detected automatically without using any algorithm by a cascade driven by data and machine learning specific to the enterprise.

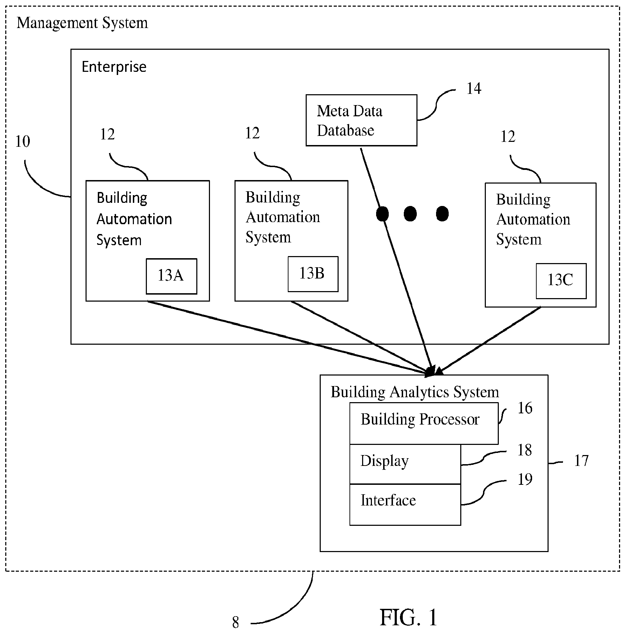

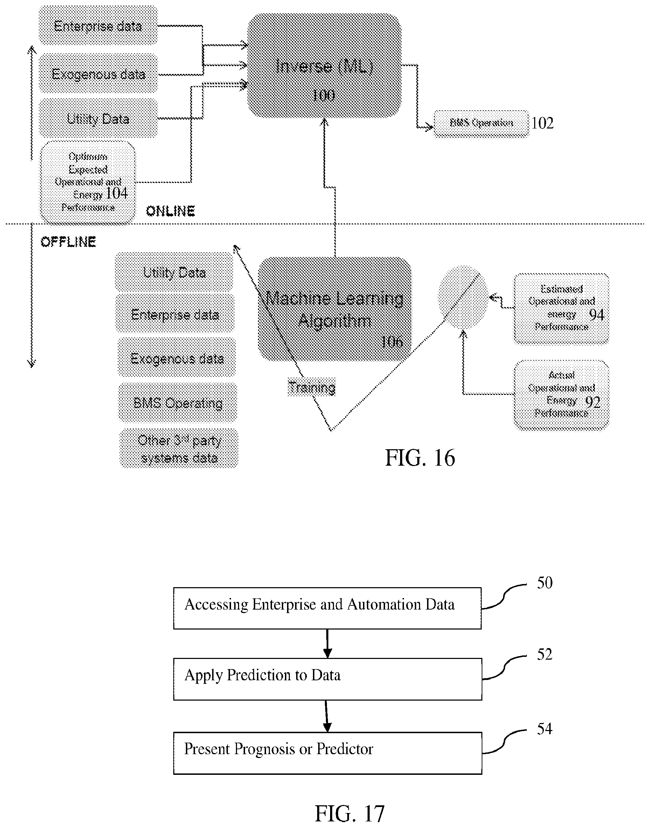

Figure 1 shows one embodiment of a management system 8 for building automation classification with a cascade. The system implements the method of Figure 17. Other methods may be implemented. The system uses big data in the form of data from many buildings or independently operating automation systems and/or in the form of meta, business, or other enterprise data not used in the control or operation of the automation systems employed in the buildings. By learning from data of many building automation systems, a cascade of machine-learnt classifiers may be applied by a building analytics system 17 to any building automation systems 12.

The management system 8 includes an enterprise 10 associated with any number of building automation systems 12 and/or a meta data database 14. A computer or building analytics system 17 with a building processor 16 and display 18 are part of the enterprise 10 or separate from the enterprise 10. Additional, different, or fewer components may be provided. For example, the building analytics system 17 may include a keyboard or mouse (not shown in the figures) that is operatively connected to the processor 16 via an interface 19 for receiving user inputs. The interface 19 may also include a network communications interface for enabling the processor 16 to communicate with building automation systems 12 and meta database 14.

The enterprise 10 is a company, organization, collective, government entity (e.g., city) or individual using an automated facility or building for business activities other than the automation of the facility. Building automation includes safety (e.g., fire alarm), environmental (e.g., HVAC), security, hazard, combinations thereof or other building systems. These automated building systems 12 provide a space for conducting business. The business is provided for other purposes than automating the building, such as sales of products or services. The enterprise 10 is in business for providing products or services, but operates in one or multiple buildings with automation. For example, a bank has hundreds of buildings for branches and/or headquarters. The enterprise 10 provides banking services, and the enterprise 10 is housed in buildings.

The enterprise 10 generates information or data. The data is business data, such as for the sales, service, human resources, information technology of operation of networks different than the building automation, accounting, budgets, or other business data. This business data is enterprise 10 level meta data different than data generated as part of or for operation of the building automation systems 12.

The enterprise or meta data is stored in a meta data database 14. The database 14 is one or more memories, such as hard drives, flash drives, tape drives, or other database. The database 14 is operated as one memory or multiple separate memories to store the various meta data.

Example meta data includes employee or student performance, such as test scores or review ratings. Other meta data may be budgets, employee attendance, staffing level, maintenance schedule or information, sales, elevator usage, or other data at the enterprise level. While the data is generated as part of the enterprise, the granularity of the data may be by regions, employee, or even building.

The building automation systems 12 includes safety (e.g., fire alarm), environmental (e.g., HVAC), security, hazard, combinations thereof, or other building systems. The automation is of a building, floor, room, or zone hosting part of the enterprise 10. In the example of Figure 1, many (e.g., two or more, tens, or hundreds) of separate building automation systems 12 are provided. Each or some of the building automation system 12 operate independently of the others. Some buildings may be operated dependently, such as where a plant or distribution is shared. Other buildings are automated independently, such as where the buildings are in different blocks, zip codes, cities, counties, states, and/or countries. A same system (e.g., HVAC) may be in different buildings and may be controlled using the same automation system 12, but the sensors and actuators of one building are controlled separately than another building. For example, a restaurant or bank may have a same building design, so use the same design of building automation system 12 for many different buildings. Despite these similarities, the operation of each building automation system 12 is independent as some buildings are in regions with different temperatures at a given time.

A given instance of a building automation system generates data, such as data from sensors, actuators, panels, or controllers. Sensors may include temperature, humidity, fire, smoke, occupancy, air quality, gas, CO₂ or CO, or other now known or later developed sensors, such as an oxygen sensor for use in hospitals. Actuator may include a valve, relay, solenoid, speaker, bell, switch, motor, motor starter, damper, pneumatic device, combinations thereof, or other now known or later developed actuating devices for building automation. The controllers or panels interact with other building automation devices for establishing, setting, altering, instructing, reporting, or routing information for controlling building automation functions. The controller is a panel, processor, workstation, and/or server.

Control processes are run on controllers, sensors, and actuators as appropriate for the particular operations of each device. The sensor reports information appropriate or specific to the sensor, such as reporting the result of a comparison of a measured value to a desired or set point value. Actuators use the output sensor data to provide a response appropriate for the actuator. Controllers monitor the process or action of sensors and actuators without control in one mode of operation. In another mode of operation, the controllers override or influence the sensor and/or actuators to alter processing based on a regional or larger area control process. For example, a controller implements a coordination control application for overriding, setting, adjusting or altering the operation of another building automation application. Alternatively, the controllers run processes to measure deviation from a set point and control the response.

Other building automation devices may include personal computers, panels, or monitors. For example, one building automation device is an actuator for controlling a building wide component, such as a chiller, boiler, building intake vent, or building airflow out take vent. Using the building automation devices, major or building wide equipment, individual spaces, or local input and output points are controlled. The sensors, actuators, and/or control may be for zones, rooms, distribution, and/or plant operation.

The building automation system 12 implements building automation applications for controlling building functions. The building automation applications are programmed with programmable powerful processing control language (PPCL) or other language.

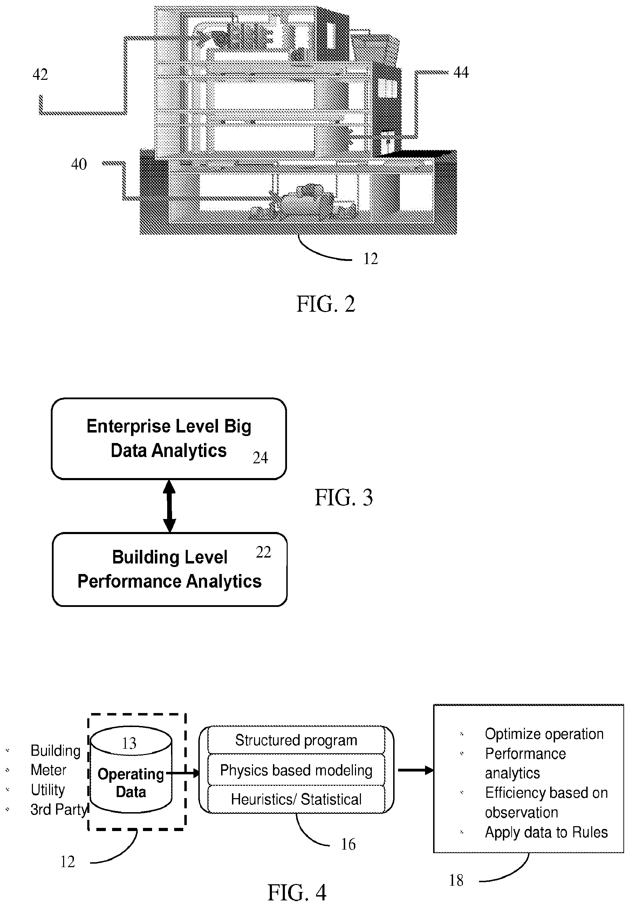

The building automation systems 12 are configured by software and/or hardware to collect, store, and output operational data 13a, 13b, or 13c in Figure 1. For a given building, operational data is used to monitor performance and/or to control the automation of the respective building. The data may be management data, such as logging changes and flagged errors. Report data may be output. Other operational data includes measures from sensors, actuator settings, set points, warnings, or other data generated in the operation of the building automation system 12. As represented in Figure 2, each building automation system 12 may generate operational data from zones or rooms 44, distribution system 42 (e.g., air handling units), and/or one or more plants 40 (e.g., water or air cooled chiller, furnace, or broiler) employed in the building in which the building automation system 12 operates.

The operational data includes input and output data. Input data is any data used to control the operation of the building automation system 12, such as sensor values. Example input values include chilled water supply and return temperatures, discharge air temperature, supply air flow rate, return air flow rate, and outdoor air temperature. Output data is any data measuring performance of the building automation system 12, such as energy usage, temperature variation, error signals, heating cost, cooling cost, ventilation cost, electricity cost, efficiency, outdoor air damper % open, and chilled water valve % open.

The operational data is provided for different times or at one time as a snap shot. A time series of data is provided by the building automation system 12. At different times, such as periodically (e.g., every second, minute, hour, or day), the operational data is logged, measured, or recorded. Two or more repetitions provide the time series of data. The time series may extend for any amount of time, such as over hours, days, weeks, or years. The beginning may be from a last reset. Alternatively, a moving window is used where the beginning is a given amount of time from the current time.

This building management data is specific to the building automation system 12, so is different than the meta data stored in the database 14. The database 14 may also store the building operation data, or the building operation data is stored in other memories. Operational data from any number of building automation systems 12 is provided.

The building automation systems 12 store the operational data for access in response to a query. Alternatively, the building automation systems 12 push data to the processor 16 of the building analytics system 17 or another device. The interface 19 of the building analytics system or computer 17 accesses the meta data database 14 and/or the building automation systems 12 to pull or collect data. Alternatively, the data is periodically pushed to the interface 19 by the respective building automation system 12. The interface 19 is a port, communications interface, or other interface for networking.

The operational data and/or enterprise data, such as meta data 14 for the enterprise 10, are communicated using wired or wireless communications. A local area, wide area, Internet, or other computer network may be used to communicate the operational data to the processor 16. For within the building automaton system 12, the same or different network is used, such as an 802.15.4 network, token network, or Mesh network. Bluetooth, Wi-Fi, computer network, Ethernet, proprietary, or other standard communication protocols may be used. 802.15.4 and 802.11x provide medium access control and a physical interface to a wireless medium. Any now known or later developed network and transport algorithms may be used.

Any packet size or data format may be used. Different bandwidths for any given communications path may be provided, such as adapting a lower level network for small data packets transmitted over short distances as compared to a higher-level network adapted for larger data packets at higher rates and for longer distances.

In typical building automation, building performance is based on observed data from sensors and operation data from actuators. The enterprise 10 also generates enterprise level data.

Figure 3 shows analysis of these two sources or data, operational or building level analytics 22 and enterprise level analytics 24 that may be performed by the building analytics system 17 of the management system 10. While the building automation systems 12 may be diagnosed by the building analytics system 17 using building level performance analytics 22, less information is available and the impact on operation of the enterprise is not provided. By including or providing enterprise level analytics 24, the impact of building automation on the enterprise 10 may be determined or vise versa by the building analytics system 17 as further described herein. Data analytics is used at an enterprise level by the building analytics system 17 for controlling the building automation systems 12 with or without the meta data. Meta data analysis by the building analytics system 17 for an enterprise may identify failures or other performance by type of building, time of day, and/or relationship to business information or other global data. The building analytics system 17 may employ such data analytics 24 in combination with performance analytics 23 to detect performance measures, such as budget expenditure for optimizing resource utilization and/or server scheduling.

Figure 4 shows an example representation of the building level performance analytics 22 of Figure 3 that may be employed by the building analytics system 17. Operating or operational data 13 from one or more building automation systems 12 that is received by the building analytics system 17 may include data from within the building, meter data, utility data, and/or third party (e.g., company providing HVAC services). A structured program, physics-based modeling, or heuristic or statistical based analysis by the processor 16 of the building analytics system 17 provides information on the display 18 and/or to be used for operating the respective building automation system 12. The information based on analysis is used to optimize performance, indicate performance, improve efficiency, or the use as feedback for controlling the building automation systems 12. The heuristic or statistical analysis may be used to learn to identify a problem, indicators of the problem, sub-systems or devices having the problem, and/or sources of the problem.

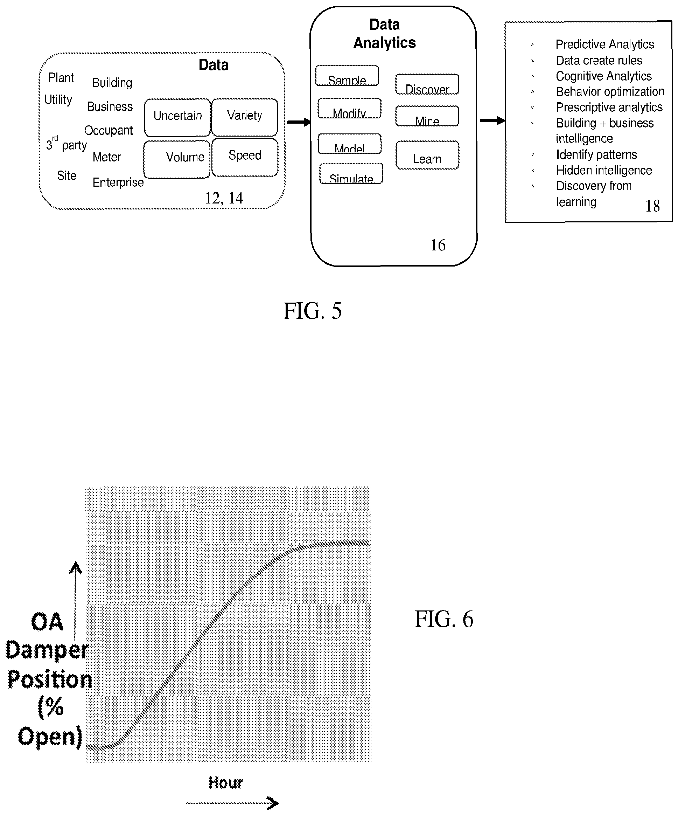

Figure 5 shows an example representation of including both building level and enterprise level data in the analytics employed by the building analytics system 17. Operating data 13 from the building automation systems 12, such as the data discussed above for Figure 4, is included with enterprise data from the database 14 that is accessible and received by the building analytics system 17. The enterprise data is building site data, occupant data, business data, or other meta data from the meta data database 14. The processor 16 applies data analytics to the converged data 13 and 14 from the business, building, plant, utility, third party, site, meter, enterprise, and/or other sources. The processor 16 may employ one or more types of analytics, including sampling, modifying, modeling, simulating, discovering, mining, and/or learning. The analytics is used by the building analytics system 17 to predict, create rules, derive cognitive information, optimize behavior, prescribe, make decisions in building and business matters, identify patterns, find hidden information, or discover unknown relationships for output to the display 18 or to another device in the management system 18. Performance analytics may be gathered by the building analytics system 17 for the entire energy system within a building (e.g., as represented by a respective building automation system 12 in Figure 1), within an entire enterprise 10, over a region, or in a collection associated with the enterprise 10 managed by the management system 8. The result is the building analytics system 17 generates converged data 13 and 14 and uses the converged data to employ analytics to create valuable knowledge and insights for the enterprise 10. The building analytics system 17 may use any of various sources of input data and building data with any of various data analytics to provide various information, such as control functions or a diagnosis of a potential fault for a building automation system 12 or other device within the enterprise 10.

In one embodiment, the data analytics employed by the building analytics system 17 includes correlating multiple variables represented in the data 13 and 14 with one or more performance criteria also represented in the data. Other sources of performance may be used. Any clustering or case based analysis may be used. By including data 13 from multiple building automation systems and/or enterprise data 14, this unsupervised learning by the building analytics system 17 may indicate useful information for diagnosis, prognosis, planning, or operation of systems or devices within the enterprise 10. Unsupervised learning employed by the building analytics system 17 determines the relationship of input variables or values of the variables to any user selected performance criterion or criteria without prior training of a classifier. The unsupervised learning indicates relationships based on data currently available without prior modeling or simulation. Additional or different machine learning may be used to identify building automation systems 12 and/or parts associated with poor performance, such as using cerebellar model articulation controller (CMAC).

The clustering employed by the building analytics system 17 may be used with a forecast or predictor of another embodiment. The information output by the clustering or other classification is used with or without the operating data of many building automation systems 12 to machine train a predictor of degraded or other operation or make a prognosis. The clustering or other classification may output a time series. The operation data outputs a time series. The predictor is trained using time series data. In an alternative embodiment, the predictor is trained without the clustering or other classification and/or without time series data. In yet another embodiment, a cascade of machine learning is used by the building analytics system 17. Machine learning is applied in layers or interaction between multiple classifiers. The different classifiers are of the same or different types, trained using the same or different input vectors, and/or trained to classify the same or different information. Operational, meta, building, weather, and/or other data are used for the input vector. Any output vector may be provided. The output of one machine-learnt classifier is cascaded to the input of another. The machine learning and resulting machine-learnt classifiers classify different aspects of the building automation using the same or different data as the input vector and the same or different output vectors.

Once trained, the cascade is applied by the building analytics system 17 to any given building automation system 12, such as one of the building automation systems 12 used for training or a different building automation system 12 not used for training. The operation data 13, classification outputs, and/or other input feature is input into another classifier in the cascade. Referring to Figure 1, the building processor 16 and display 18 are part of a building analytics system 17. The building analytics system 17 extracts data included in the operational data 13 and/or enterprise data 14 that is obscured from the user to become viewable through machine learning and/or application of a cascade of machine-learnt classifiers performed by the building analytics system 17. Three approaches are discussed below - clustering, prediction or forecasting, and cascade. These approaches may be used together, such as using prediction and/or clustering in the cascade, or may be used independently or separately.

The building processor 16 is a computer, server, panel, workstation, general processor, digital signal processor, application specific integrated circuit, field programmable gate array, analog circuit, digital circuit, combinations thereof, or other now known or later developed device for processing big data and determining the relationship of big data to building automation or vice versa. The building processor 16 is a device for performing the data analytics, such as the machine learning.

The processor 16 is part of the enterprise 10. In one embodiment, the data analytics is performed by a management computer of a building automation system 12. Alternatively, the processor 16 is separate from the enterprise 10 to provide the data analytics as described herein as a service to the enterprise 10 by the building analytics system 17 as depicted in Figure 1. For example, the building analytics system 17 may be a server in network communication with the building automation systems 12 and meta data database 14 of the enterprise 10 to perform the data analytics as described herein and then output control or other information to the enterprise 10 and/or different building automation systems 12 distributed in different buildings for control. The data analytics may output data, charts, graphs or other information to communicate results to a technician.

The processor 16 of the building analytics system 17 is configured to analyze the data, such as the building automation operation data 13 and/or the enterprise data 14. The data represents various variables. Values are provided for the variables. The values may be measures of the variable over time, at one time, by location (e.g., value for each building automation system), constant, or combinations thereof. For classification by cascade, prediction, and/or clustering, big data is pre-selected by the user or default big data is used by the processor 16. Output from other classification may additionally be used for other classification. The big data represents variables of the operational and/or enterprise data. The big data is used by the building analytics system 17 for the machine learning. The machine-learnt classifier or classifiers are applied to individual building automation systems or data for many building automation systems.

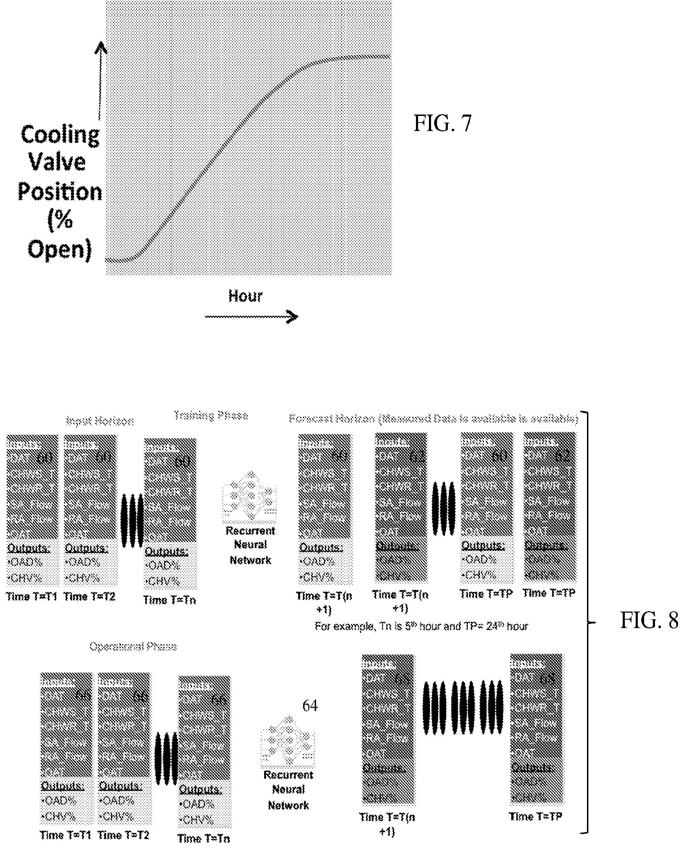

The building processor 16 of the building analytics system 17 performs machine training to relate input features to classification. In one embodiment, one of the classifiers or layers of machine learning in the cascade or an independent predictor is trained by the building processor 16 to make predictions of degradation, other event, or forecast operation. For example, Figure 6 shows a damper position as a percentage of open over time. Similarly, Figure 7 shows a cooling valve position as a percentage of open over time. The fully open position after a given number of hours represents degraded performance. The building processor 16 trains a machine-learnt classifier to predict whether degradation will occur based on the input time series. In another embodiment, the building processor 16 trains a machine-learnt classifier to forecast cost for various sub-systems, such as heating, cooling, ventilation, and electricity. Buildings with relatively higher cost or other problem may be identified by the building analytics system 17. In yet other embodiments, the building processor 16 trains the machine-learnt classifier to identify a building automation system and/or sub-system (e.g., air handling unit, chiller, or boiler) that is malfunctioning, such as not operating correctly so that higher costs or lower efficiency results as compared to normal operation.

The building processor 16 applies machine learning to the data. The machine learning applied by the building processor 16 determines a statistical or other relationship between the data 13, 14. The data 13, 14 is used by the building processor 16 for training as well as the ground truth. In prediction, a sub-set of times is used as input features. Another sub-set associated with the performance criteria (e.g., part failure) of the time series is used as the ground truth. For other machine learning, some variables are used as inputs and other variables are used as the ground truth.

In the prediction approach, the machine learning performed by the building processor 16 relates the input operation data 13 for time prior to the times of degraded performance to predict the degraded performance. Figure 8 shows an example. The training data includes data sets 60 of input and output data for different times, such as 24 sets over 24 hours. A sub-set, such as hours 1-20, of the sets 60 are used as inputs to the machine learning. The remaining sub-sets, such as hours 21-24, of the sets 60 are used as ground truth for the machine learning. The building processor 16 learns to predict the operational data 13 from the input using the ground truth from many examples (e.g., many building automation systems 12 operating over the same period). The machine training performed by the building processor 16 determines the relationships between the input features to forecast input and output data sets 62. Upon application, the forecast operation data is analyzed by the processor 16 and/or the user to identify degraded performance or other event. Alternatively, the machine learning learns to directly forecast the failure, degradation, or other event.

In another approach, the machine learning performed by the building processor 16 relates any input vector to any output vector. The output vector may be a single variable or a group of variables. The machine learning learns to classify the input data. The values of the output vector are determined from the input based on learning. The machine learning determines the relationship. For a cascade, an output of one classifier may be used as an input to another classifier. This other classifier learns to classify, in part, from the classification output by the other classifier.

Any now known or later developed machine learning may be used by the building analytics system 17, such as neural network. For example, the processor 16 of the building analytics system 17 is enabled to use a recurrent neural network or other machine learning based on a time series to predict the future time series and/or an event. As another example, back-propagation is used for one classifier and a CMAC is used for another. Support vector machine, Bayesian network, clustering, supervised, unsupervised, semi-supervised, or any other machine learning and/or solution for learning may be used. The machine learning of the cascade uses any machine learning employed by the building analytics system 17 for any layer, such as the same machine learning for all layers or different machine learning for each layer.

The machine learning employed by the building analytics system 17 determines the relationship between one or a set of variables or values to another one or set of variables or values. In one embodiment, one or more variables are selected by the building analytics system 17 as performance criterion or criteria. For example, data showing cost are identified. As another example, data showing a fault associated with the cost are identified. In another example, data showing a source of fault are identified. The machine training learns to distinguish poor cost, faulty operation, and/or source of fault from normal cost, normal operation, and/or devices not a source of the fault. The variable or variables representing cost, fault, or source may be from the operational data 13 or may be from the enterprise data 14. For example, cost may be reflected through increased enterprise cost. The enterprise cost over time is used as a measure of performance. The machine training learns employed by the building analytics system 17 to distinguish between operational data 13 that leads to increased enterprise cost from operational data 12 that does not lead to the increased enterprise cost. As another example, the operation data 13 is used as the measure of performance, such as the amount of "on" time for a boiler normalized by outside air temperature. In other examples, the machine training employed by the building analytics system 17 learns to predict future operation without specifically identifying increased cost. A separate analysis identifies increased cost from the forecast operation.

In a cascade embodiment, different data is collected, such as building level data (e.g., heating cost), system level data (e.g., hot water supply temperature), and component level data (e.g., % open for a valve or damper) by the building analytics system 17. The building analytics system 17 applies the building data to machine learning for identifying building level variables such as heating cost information. The building analytics system 17 applies the system level data to other machine learning for identifying a source of the fault within the building, such as hot water supply temperature. The building analytics system applies the component level data to yet other machine learning for identifying a fault (e.g. % open for a valve or damper) associated with the building systems, such as heating that drives building level variable such as cost information. Three classifiers are trained and output by the building analytics system 17 as a cascade.

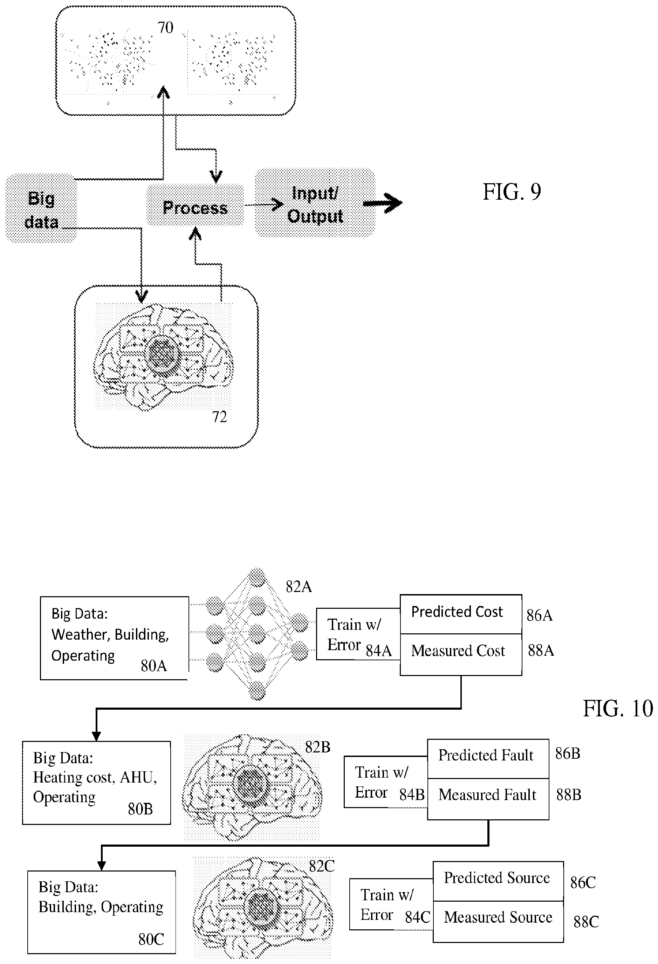

In one embodiment, a hybrid system of analytics is trained by the building processor 16. The hybrid may be a cascade. An additional classifier or classifiers are trained, as represented in Figure 9. One or more classifiers are trained by the building analytics system 17 to classify from the big data or data from a plurality of building automation systems 12. The same or different training data is used as for training the predictor 64 or other classifiers in the hybrid. In the example of Figure 9, unsupervised learning is used to train a clustering classifier 70 and other machine learning (e.g., CMAC) is used to train another classifier 72. More, fewer, or other training may be used. The training for each classifier 70, 72 may be separate. Alternatively, the classifiers 70, 72 are trained with feedback or feed forward information or other exchange of input or output information between the classifiers 70, 72. These initial machine-trained classifiers 70, 72 are for any purpose, such as identifying particular automation systems 12 or parts thereof of interest or finding a relationship between information.

The output of the classifiers 70, 72, once trained, is processed and output by the building analytics system 17 to use in training the predictor 64 or other classifiers of a cascade. Similarly, the outputs are used for predicting from the trained predictor 64. Any synthesis of the outputs from the classifiers 70, 72 may be used. For example, the outputs from the classifiers 70, 72 are used directly as input features for the predictor training or application. As another example, one or more values are calculated using one or more outputs from each of the classifiers 70, 72 employed by the building analytics system 17. The calculated values are used as part of the input feature for the predictor.

In one embodiment of a cascade, the output of one classifier employed by the building analytics system 17 is used as an input of another classifier employed by the building analytics system 17. Figure 10 shows an example cascade with machine learning for three classifiers 82A-C. More or fewer classifiers 82 may be used in the cascade.

The cascade is trained to provide different types of classification. Each of the classifiers 82A-C of the building analytics system 17 classifies a different type of information. For example, the training for the classifier 82A is to classify the cost or costs for building automation. By classifying the cost, unusually high costs are identified. Buildings or building automation systems with unusually high cost and the type of cost may be output. The training for the classifier 82B is to classify the fault causing the cost. The classifier 82B is trained to identify temperature, flow, or other operational characteristic of the building automation causing the high cost. The cost or costs are used as an input. The training for the classifier 82C is to classify the source of the fault. The classifier 82C is trained to identify the device, sub-system, or setting causing the fault. The fault is used as an input. In other embodiments, the classifiers are trained to identify different characteristics related to each other in a cascade.

In an example of machine training a cascade, the building processor 16 of the building analytics system 17 is configured to train each of the classifiers 82A-C. Since the classifiers 82A-C operate in cascade, the training is in order from the first layer (e.g., classifier 82A) to the last layer (e.g., classifier 82C). The same or different data is input for the training of each classifier. The data is gathered by the building processor 16 from many examples, such as operational data and other data for tens or hundreds of other building automations systems of other buildings. For example, data from 500 hundred buildings with similar or same building automation systems is gathered for training by the building analytics system 17. The data has ground truth information, such as known values for the output variable or variables of the classification.

In this example, the classifier 82A of the building analytics system 17 is trained to identify whether a given building automation system has undesired cost or efficiency. The ground truth is whether costs are above a threshold, such as a percentage above an average or other measure of deviation. In one approach, the classifier 82A is trained by the building processor 16 to predict the cost, and the resulting predicted cost is compared to norms or thresholds.

Big data in the form of data from many other building automation systems is used as the input vector 80A. Weather, operational data 13, and building data (e.g., geographic location of the building) are input, but other data may be used. Using back-propagation, the classifier 82A is trained by the building processor 16 based on error between predicted cost 86A and measured or ground truth cost 88A. Any costs may be used, such learning to classify heating, cooling, ventilation, and electricity costs. The back-propagation uses the difference between predicted and measured for training, as represented at 84A. Once trained, the classifier 82A uses input data from a given building automation system 12 and building to forecast any excessive costs.

The next classifier 82B employed by the building analytics system 17 is trained to identify a fault causing any excessive costs. The ground truth is the fault. The same or different big data is used as the input vector 80B as used in input vector 80A. For example, the output from the classifier 82A is used with operational data 13 for relevant sub-systems given the cost (e.g., air handling unit and boiler information where the cost is heating). All of the predicted costs or just the one associated with excessive cost are included in the input vector 80B by the building processor 16. Using CMAC, the classifier 82B of the building analytics system 17 is trained based on error between predicted faults 86B and measured or ground truth faults 88B. Using the error in 84B, the classifier 82B of the building analytics system 17 learns to predict the fault causing the cost. The classifier 82B may predict and the resulting predicted value identified as faulty, or the classifier 82B may directly classify as faulty or not. Any faults may be predicted, such as fault in discharge air temperature, hot water supply temperature, outdoor air flow, and/or supply air flow. Once trained, the classifier 82B employed by the building analytics system 17 uses input data to classify the fault of any excessive costs. Different fault classifiers 82B may be trained for different costs or combination of costs. Alternatively, one classifier 82B is trained to classify the fault given any of the possible costs.

The classifier 82C of the building analytics system 17 is trained by the building processor 16 to identify a source of the fault. The ground truth is the source. The same or different big data is used by the building processor 16 as the input vector 80C as for the other input vectors 80A and B. The fault may be used to determine the input vector 80C, such as the fault being hot water supply temperature so data associated with devices involved in hot water supply is used. Different classifiers 82C of the building analytics system 17 are trained for different faults. Alternatively, one classifier 82C is trained for all possible faults. The output from the classifier 82B of the fault may alternatively or additionally be used as an input for the input vector 80C, such as inputting a predicted hot water supply temperature output by the classifier 82B. All of the forecast fault classifications or just the one associated with an identified fault are included in the input vector 80C. Using CMAC of the building analytics system 17, the classifier 82C is trained based on error between predicted sources 86C and measured or ground truth sources 88C. Using the error in 84C from predicted operation of the devices of the building automation, the classifier 82C learns to predict the source of the fault. The classifier 82C employed by the building analytics system 17 may predict device operation and the resulting prediction value identified as a source or may directly classify as a source or not. Any sources may be predicted, such as a valve position, the valve, a sensor, a sensor value, or other variables. Once trained, the classifier 82C uses input data to classify the source of the fault.

Other analytics may be included in the cascade or handled separately by the building analytics system 17. In an example of use of the clustering classifier 70 (Figure 9), unsupervised machine learning is used. Variables from the big data are used by the building analytics system 17 to cluster relative to any measure of performance in order to determine which variables or values of variables distinguish between good and bad performance. Combinations of variables and the associated values may be employed by the building analytics system 17 to distinguish or correlate more strongly with the performance. The good and bad performances are relative terms based on the range of values for the performance measure. A default or user selected delineation between good and bad performance may be used. Alternatively, the clustering or other unsupervised learning employed by the building analytics system 17 applies a standard deviation or other analysis to distinguish between good and bad performance.

In one example, clustering is used by the building analytics system 17 to measure building performance. The operational data 13 of the building automation systems and/or enterprise data 14 are clustered by the building analytics system 17 to determine whether the building automation systems 12 are operating as desired. In another example, data analytics are used by the building analytics system 17 to measure performance of the enterprise, business unit, employee, customer, or other enterprise-related group. The operational data of the building automation systems and business data from a business controlling the multiple buildings are clustered by the building analytics system 17 to determine whether the building automation systems 12 impact the enterprise.

The machine learning employed by the building analytics system 17 finds patterns, behavior, family, clustering, classifications, or other grouping of factors correlating with the performance. In one example, the enterprise is a school system with many buildings for schools. In this example, student performance is used as the measure of performance. This enterprise data may be test scores, grades, or other information available as meta data 14 for access by the building analytics system 17. Any or all of the operational variables of the building automation systems 12 for this school system enterprise 10 may be analyzed by the building analytics system 17 to determine correlation with or degree of influence on the performance measure.

In this example, the clustering as identified by the building analytics system 17 in accordance with embodiments disclosed herein may indicate that the classroom ventilation directly impacts student performance given other variables remaining the same. The group of buildings with poorer ventilation may be identified by the building analytics system 17 as a cluster.

The other variables or values may impact performance, but to a lesser degree, as determined by the building analytics system 17. Based on the identified clusters, the building analytics system 17 is able to determine whether one group of variables or values is impacting performance more substantially than others. Based on pre-selected criteria, such as correlation ranking, the cluster results are ranked by the building analytics system 17 for the user to choose and use. For example, the level of influence, correlation coefficient, or relative impact is used by the building analytics system 17 to distinguish between the variables or value range influence on the performance.

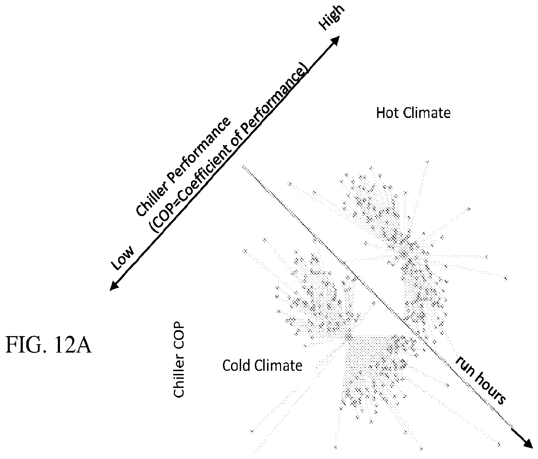

Figure 12A shows an example of clustering performed by the building analytics system 17 in a chiller performance example. Weather data, age of chiller controlled by a respective building automation system 12, type of chiller and geographic location from a large number of buildings (e.g., 50 buildings) are selected as input variables to the building analytics system 17. The processor 16 applies clustering to determine the relationship or correlation of the various input variables to the chiller performance, here measured as coefficient of performance. Each dot in the cluster represents one of the chillers. Performance is mapped by the building processor 16 to the y-axis, and run hours are mapped to the x-axis. The cluster in the upper right is associated by the building processor 16 with performance in hot climates and the cluster in the lower left is associated with cold climates. The climate (e.g., combination of weather data and location) is a third dimension use for clustering along the y and x-axes in case based reasoning by the building processor 16 of the building analytics system 17. For case based reasoning, the processor 16 of the building analytics system 17 enables the user to select the clustering variable (e.g., climate), x-axis, and/or y-axis variables to be used. The processor 16 may also perform clustering as described herein using various combinations without user selection to identify the combination with the greatest or group of combinations with a threshold correlation. Other input variables may have less correlation with chiller performance, so the building processor 16 may identify such other input variables as not determinative. Based on the clustering indicating a correlation as determined by the building processor 16, the design, maintenance, or replacement of the chiller for some buildings may be handled separately from others, such as based on climate in accordance with the determined clustering correlation. This case based reasoning employed by the building analytics system 17 may be used to improve the chiller performance or other variable used for clustering.

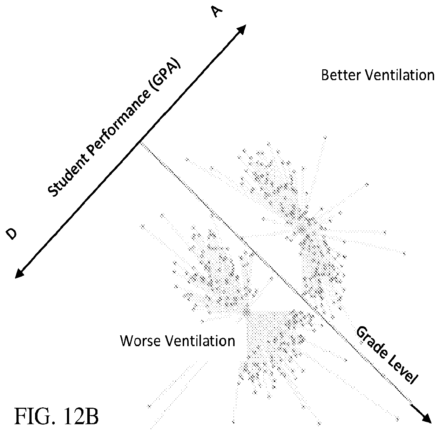

Figure 12B shows an example of clustering performed by the building analytics system 17 in the student performance example of case based reasoning with clustering. Space CO₂, ventilation, geographic location, type of distribution (e.g., water or air), age of a respective building automation system 12, mechanical system, and weather are selected as the input variables to the building analytics system 17, but other variables may be used. The processor 16 applies clustering (e.g., unsupervised learning) to determine the relationship or correlation of the various input variables to the student class performance (e.g., grade point average (GPA)). Each dot in the cluster represents a student. Performance (e.g., GPA) is mapped by the building processor 16 to the y-axis and grade level is mapped to the x-axis. The cluster in the upper right is associated by the building processor 16 with better ventilation and the cluster in the lower left is associated by the building processor 16 with poor ventilation. The ventilation is a third dimension use for clustering along the y and x-axes in case based reasoning by the building processor 16 of the building analytics system 17. For case based reasoning, the building processor 16 of the building analytics system 17 enables the user to select or identify (via keyboard or other input device through the interface 19) the clustering variable (e.g., ventilation), x-axis, and/or y-axis variables to be used. The processor 16 may also cluster using various combinations without user selection to identify the combination with the greatest correlation or group of combinations with a threshold correlation. Other input variables may have less correlation with student performance, so are not determinative.

Based on the clustering indicating a correlation, the school system may determine which buildings have poor ventilation. By improving the ventilation, student performance should increase.

In one embodiment, different types of unsupervised learning are applied by the building analytics system 17 in the management system 8 to the same data with the same performance criterion or criteria. For example, different types of clustering are applied by the building analytics system 17 such that the results from the different types of clustering (e.g., correlation coefficients of each variable to a given performance criterion) are averaged, weighted averaged, or otherwise combined by the building analytics system 17. Probability distributions may also be combined. In other embodiments, the results from the different types of clustering are automatically selected by the building analytics system 17 based on a predefined ranking. For example, the user pre-selects a ranking criterion or criteria, such as correlation ranking. The results from the different types of clustering are ranked for the user to choose and/or use. A processor automatically selects the higher N ranked results, where N is an integer of 1 or higher.

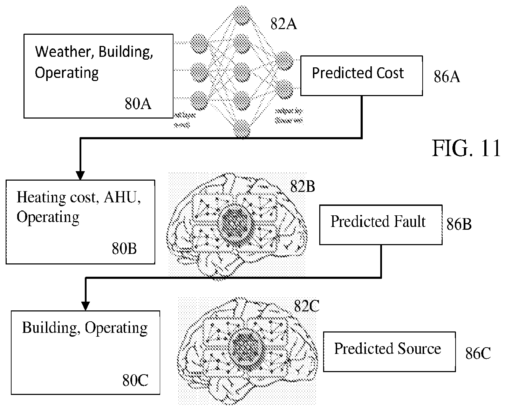

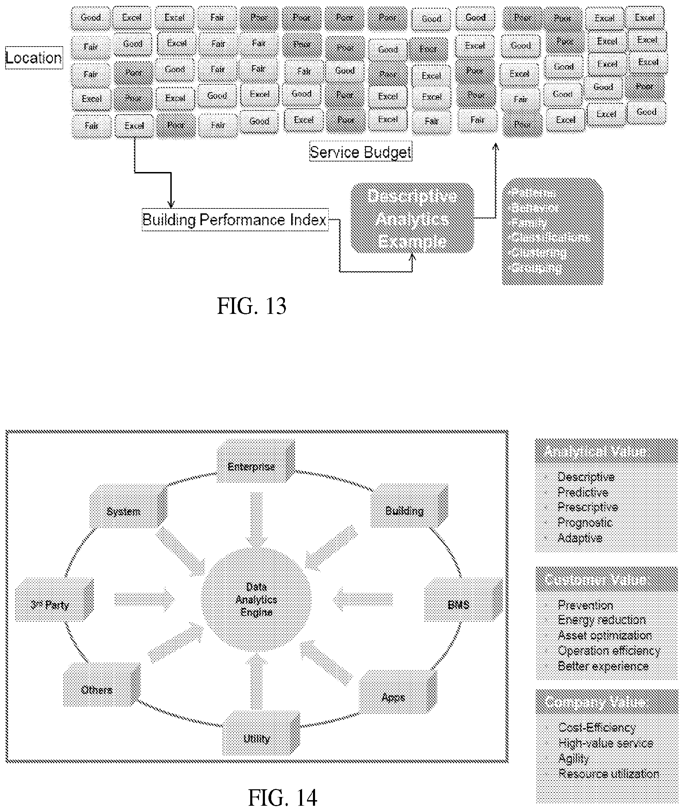

Figure 13 shows another example of analysis using entriprise data 14 that is employed by the building analytics system 17. In Figure 11, each "good," "excel," "fair," and "poor" box represents a location. The building performance index or criterion is the service budget. The service budget is accessed by the building analytics system 17 from the enterprise data 14. To find a pattern, clustering, family identification, or grouping is used by the building analytics system 17. For example, the building analytics system 17 may employ clustering to identify that the number of open maintenance positions correlates with the performance of the building automation system 12 related to the service budget for the associated building automation system 12. The data is classified with unsupervised learning by the building analytics system 17 in the management system 8 for the enterprise 10 to determine enterprise level behavior resulting in the service budget level. The clustering may additionally or alternatively determine commonalities of location associated with the performance, such as identifying that buildings in the enterprise 10 near large bodies of water are clustered relative to buildings spaced from water.

In one embodiment, the processor 16 of the building analytics system 17 applies unsupervised learning to identify sub-sets of building automation systems 12. The sub-set may be of underperforming automation systems 12 or automation systems 12 with optimal or sub-optimal performance. For example, in this embodiment, the building processor 16 is able to identify a correlation of the operational and/or enterprise data with a measure of building automation performance to then identify both the buildings and variables for those buildings associated with the poor performance. In a banking enterprise example, the building analytics system 17 in accordance with disclosed embodiments may identify one chiller or chillers in the banking enterprise 10 as not performing equally across climatic regions. Chiller operation and location may be identified by the building analytics system 17 in a cluster of the poor performing buildings within the enterprise 10. The banking enterprise may alter the design of the chillers in some regions of the enterprise 10 without suffering the cost of replacing chillers in all regions.

Enterprise data (e.g., meta data, service records, utility data, business data, and/or budget information), building data (e.g., age and/or location), systems data (e.g., type of distribution system - water and/or air), application data (e.g., building sensor and/or operations data), and/or other types of data are analyzed, such as analyzed by the building analytics system 17 in accordance with disclosed embodiments for building performance, enterprise performance, or other factor. The different buildings being controlled in an enterprise 10 by a respective building automation system 12 in communication with the building analytics system 17 may be rated for performance using different criteria and/or sources of data. The data is used by the building analytics system 17 to find insight into the performance and/or control to optimize performance or diagnose building automation or enterprise performance. The enterprise data is used as input variables and values related to performance and/or as the performance.

The clustering is used to identify by the building analytics system 17 groupings or other information used by the predictor 64. In machine training the predicator 64, the cluster information may be used. The relationship of any cluster distinctions to forecast operation and/or degradation is learned. Alternatively, the clustering is used to identify which building automation systems 12 the predictor should learn from and/or be applied to once learnt.

In another embodiment reflected in Figure 9, the clustering information may be used by the building analytics system 17 to identify a specific building automation system 12 associated with the poor performance. The other machine training of the building processor 16 learns to classify the part of the building automation system 12 from the clustering information and/or big data. This part information may be used in training and/or application of the predictor 64. A cascade of machine learning is used by the building analytics system 17 to identify the building or sub-system, the fault, and/or source.

As shown in the prediction example of Figure 8, the machine learning employed by the building analytics system 17 includes a training phase and an operational phase. Once the recurrently neural network or other machine learning algorithm is trained by the building processor 16 with the input feature (e.g., operational data sets 60) and performance measures or outputs (e.g., operational sets 60 for T₍ₙ₊₁₎), the machine-learnt predictor 64 or other classifier is used to predict in the operational phase. The machine-learnt predictor 64 or other classifier of the building analytics system 17 is a matrix or other representation of a machine-learnt classifier, such as a plurality of weights for nodes and interconnections between nodes in any number of layers from the input variables learned to map to the output variables.

To use or predict, the machine-learnt predictor 64 is employed by the building analytics system 17 to receive an input vector. For prediction, the input vector is values of variables used for training. In the example of Figure 8, the time series of input and output data sets 66 for a given building automation system 12 is input as the vector or feature. Any number of times may be used, such as the number of times used for training. Any range of times, such as minutes, hours, days, weeks, or years may be used in the time series of the input. Based on the input vector gathered by the building analytics system 17, the machine-learnt predictor 64 of the building analytics system 17 outputs data. In one example, sets 68 forecasting the input and output data values in the future are output by the building analytics system 17. In other examples, other performance is predicted by the building analytics system 17, such as degraded operation or failure of the building automation system 12 or a part. Rather than forecasting the future, the cost, fault, source, or other information given measurements from any time may be classified. A prediction of operation is made by the building processor 16 rather than or in addition to a forecast of future operation.

The learned performance being predicted and/or the forecast sets 68 of input and output data indicate degradation of the building automation system 12. The particular combination of predicted data for a time in one set 68 or variation of data across times (e.g., across forecast sets 68) for the building automation system 12 is used by the building analytics system 17 to indicate degradation of a particular part of the building automation system 12 or degradation in general. Alternatively, the prediction is specific to part of the building automation system 12, such as different machine-learnt predictors 64 trained to predict degradation of different parts. In yet other alternatives, the machine-learnt predictor 64 predicts degradation of the overall building automation system 12 regardless of failure of any particular part.

Returning to an example cascade embodiment, an enterprise 10 owns 500 buildings and desires to reduce energy costs in one example. A cascade of machine-learnt classifiers is trained by the building analytics system 17. For example, back-propagation and CMAC are used to train by the building processor 16 the cascade to predict cost, predict fault, and predict the source of fault. High-level problems, such as energy consumption or efficiency are pinpointed using the back-propagation. This high-level problem is cascaded into a specific issue, such as a sensor or valve. The cascade utilizes the topology of the building automation system 12 to relate the high-level problem to specific faults and sources. The problem is cascaded to a specific source.

The machine-learnt cascade is applied by the building analytics system 17 to data from any of the building automation systems 12. The cascade may be trained for a particular building automation system arrangement, such as duplicated building automation systems 12 for similar sized buildings of an enterprise 10. In other embodiments, the cascade is trained by the building analytics system 17 on building automation systems 12 with any amount of variation in design, such as different arrangements for different size buildings. The cascade is trained by the building analytics system 17 for a particular enterprise 10 or sub-set of buildings of a particular enterprise 10. Different cascades are trained for different enterprises. Different cascades may be trained for different sets of building automation systems 12 in a same enterprise 10. Different cascades may be trained for different purposes, such as to deal with different high-level problems. In other embodiments, a cascade is trained for predicting across more than one enterprise 10.

Once trained, the cascade is applied by the building analytics system 17 to any building automation system 12. Data from many building automation systems 12 is used to train the cascade, which is then use to classify for a given building automation system 12. The same cascade may be applied to different building automation systems 12. The data for each building automation system 12 is input separately to the building analytics system 17 to classify the source of any fault of the building automation system 12 causing any problem of the given building automation system 12. The cascade is used to address problems of specific building automation systems 12 so that only the building automation systems 12 with problems are corrected.

Figure 11 shows an example application of the cascade by the building analytics system 17. An input vector 80A, such as weather, building, and operational data is input to the machine-learnt classifier 82A employed by the building analytics system 17. The classifier 82A predicts the cost, identifies a building with undesired cost, and/or otherwise classifies the building as having a problem or not. The predicted cost or problem is cascaded as part of the input vector 80B to another machine learnt classifier 82B employed by the building analytics system 17. For example, the heating cost is identified as a problem by the classifier 82A. As a result, the predicted heating cost, air handling unit operating data, and boiler data are input to the classifier 82B. The classifier 82B classifies the fault causing the cost. For example, the fault of the building automation system 12 is classified as a hot water supply temperature. This predicted fault 86B is cascaded to the input vector 80C of the classifier 82C employed by the building analytics system 17. Using the fault, predicted value of the fault (e.g., supply temperature), weather data, building data, operating data, and/or other data, the classifier 82C of the building analytics system 17 predicts a source 86C of the problem in the building automation system 12 identified by the classifier 82A, such as a damper or valve or settings of the damper or valve.

The cascade employed by the building analytics system 17 may include a classifier to determine which building automation systems 12 and/or for what type of problem to test. Classification by the building analytics system 17 is used to select the data to input and/or the classifiers of the cascade to use. For example, clustering by the building analytics system 17 using unsupervised learning for an enterprise 10 identifies poor performing building automation systems 12. A cascade is used by the building analytics system 17 to identify the source of the problem in the identified building automation systems 12. The application of the cascade is automated or semi-automated. The machine-trained classifiers 82A-C of the cascade used by the building analytics system 17 allows use of large amounts of data for a particular building automation system 12.

Figure 14 is another representation of an overall approach employed by the building analytics system 17 to use data with machine learning in building automation. Enterprise data, building automation system data (e.g., which may be part of the operational data 13), data from third parties (e.g., weather or operation information from a service), utility data (e.g., rates), building data (e.g., location and size), building management system (BMS) data (e.g., which may be part of the operational data 13 and/or include building asset tracking data that is not part of the operational data 13), application data (e.g., specific operational data pertaining to a corresponding application of a building automation system 12, BMS or other building controller), and/or other data is analyzed by the building analytics system 17 using machine learning as part of the data analytics engine implemented by the building analytics system 17 as shown in Figure 14. This learning may be descriptive, predictive, prescriptive, prognostic, or adaptive for each of the building automation systems 12 and/or the enterprise 10. The learned relationships identified by the building analytics system 17 in accordance with embodiments disclosed herein may be used to prevent problems, reduce energy usage, optimize assets, increase efficiency, and/or provide better experience. The analysis is provided by the building analytics system 17 as network component of the enterprise 10 or by a service to assist the enterprise in cost efficiency, valued service, agility, and/or resource utilization. Relationships between any variables and any performance may be provided to the building analytics system 17 employing the analytics embodiments disclosed herein. By analyzing big data, large amounts of variables, a broad range of values, or variables with measures over many samples (e.g., many buildings), the building analytics system 17 may use clustering, prediction, or cascade to identify unexpected relationships and/or hypotheses for improving performance within the associated enterprise 10.

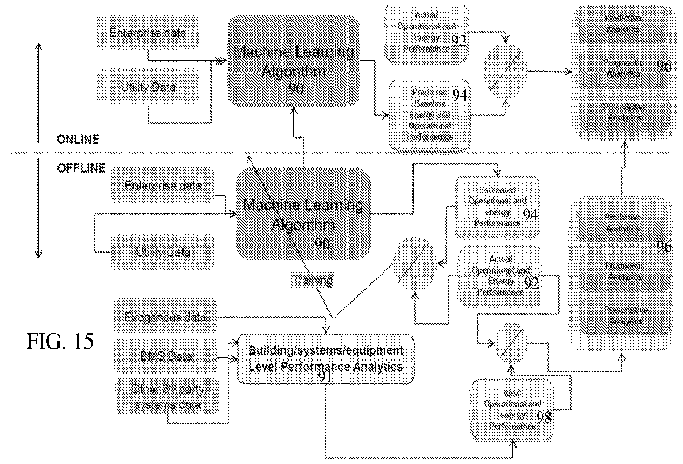

Rather than clustering or case-based reasoning, a machine learnt classifier may be trained by the building analytics system 17 to diagnose operation of the enterprise and/or building automation system 12 using both building automation data 13 and enterprise data 14. Figure 15 represents an example. In an offline process, the building analytics system 17 trains a classifier 90 using enterprise data, utility data, and/or other data. The classifier 90 is trained to estimate 94 operational and/or energy performance. Other performance measures may be used. In a feedback or online learning approach, the training employed by the building analytics system 17 may include comparison of estimated 94 verses actual 92 performance. Using this process, the building analytics system 17 continues the training until a desired accuracy is reached.

Exogenous data, building management system data, other third party data, and/or other data in analyzed by the building analytics system 17 for performance 91. This data analytics by the building analytics system 17 may yield an ideal or desired performance 98, such as using clustering to identify the characteristics (e.g., values) for correlated variables of buildings with better performance. The building analytics system 17 compares this desired performance 98 with the actual performance 92. Using predictive, prognostic, and/or prescriptive analytics 96, the comparison by the building analytics system 17 may trigger an upgrade, change, or retraining of the online or trained classifier.

Once trained, the machine-learnt classifier 90 employed by the building analytics system 17 receives the input feature vector from the enterprise, utility, or other data to predict performance 94. The predictive performance 94 may be compared by the building analytics system 17 to actual performance 92 for use in various analytics 96. The output of the machine-learnt classifier 90 may be used in clustering processes performed by the building analytics system 17, such as relating predicted performance 94 of the energy or operation of the building automation to an enterprise performance variable. Clustering as employed by the building analytics system 17 may be used to derive an input for the input features vector of the machine-learnt classifier 90.

In another embodiment represented in Figure 16, an inverse machine-learnt classifier 100 is employed in the building analytics system 17. The building analytics system 17 trains the classifier 100 to use various data to predict performance 94 based on actual performance 92. Some of the data used as an input to the training of the machine-learnt classifier 106 includes building automation data, such as set points, operation sequence, operating ranges, or other control information. The inverses machine learnt classifier 100 of the machine-learnt classifier 106 may convert desired performance 104 into building management system operation parameters 102 (e.g., set points, sequence of operations, and/or operation range, such as sets 68). Enterprise and building automation operational data are used in the training and inversion.

The data to be used for training and inversion may be determined by clustering employed by the building analytics system 17in accordance with the embodiments disclosed herein. The variables most determinative of the desired operation or energy performance 104 are determined by clustering pre-process by the building analytics system 17.

Returning to Figure 1, the display 18 is a liquid crystal display, light emitting diode display, CRT, monitor, plasma, projector, printer, or other display. The display 18 is configured by the processor 16 to present results of the machine-learnt classification as employed by the building analytics system 17. In one example, the source, the fault, and/or the cost predicted by the cascade of the building analytics system 17 are output to the display 18. As another example, the building automation system with a problem, a sub-system for the problem, and/or a setting or device of the sub-system causing the problem are predicted by the cascade of the building analytics system 17 and output to the display 18. Predications of optimum, satisfactory, or normal operation may alternatively or additionally be output by the building analytics system 17 on the display 18.

In other embodiments, the processor 16 transmits results for use in control or other uses. The building automation systems 12 may be controlled to increase performance. The results may be transmitted to a manager or service to schedule maintenance to avoid failure or degradation. The output of the cascade is used to reduce cost, avoid downtime, or indicate a need for redesign. The building processor 16 outputs the prediction to the technician on the display 18, outputs a message to a supervisor, or outputs a calendar event for training.

Figure 17 shows one embodiment of a method for building automation classification in a building management system. The method is implemented by the building management system 8 of Figure 1 or a different system.

Additional, different or fewer acts may be provided than shown in Figure 17. For example, act 54 is not performed, but instead a transmission, storage, or rule-based action occurs using the output.

Figure 17 represents either training a cascade with machine learning or application of machine-learnt classifiers in a cascade. The method is first discussed in a cascade learning or training phase. The method is then discussed below in an operation or application phase.

In act 50 for learning, a building processor 16 or other part of the building analytics system 17 accesses data related to a plurality of buildings through an interface 19 or from memory. The access is by receipt of information, request of information, or loading information. Multiple memories may be mined by the processor in the management system 8 related to multiple building automation systems in an enterprise. In alternative embodiments, data related to a single building is accessed.

The data includes building management system or building automation system operational data with or without enterprise data different than the building management system or building automation system data. The building automation systems in the enterprise and in communication with the building management system generate data specific to building automation. For example, actuator settings, sensor readings, set points, meter information, weather, utility information, measures of performance, or other input or output data for the daily operation of the respective building automation system are accessed. The building management system includes automation for heating, cooling, ventilation, fire safety, or combinations thereof data.

The enterprise generates data specific to the business of the enterprise. The business of the enterprise is not automation of the buildings. Instead, budget, maintenance, employee complaint, or human resources data of the enterprise is accessed.

The enterprise data is accessed in an enterprise database 14. The enterprise database 14 is one or more memories organized as one database or as separate data structures. The enterprise data representing one or more variables is accessed. The values for a given variable may be the same or different across the multiple buildings. For example, the maintenance budget for the building is associated with the multiple buildings but may or may not be different for different buildings. The amount of deviation from the budget is more likely to be different for different buildings.

The accessed data may be all or a default sub-set of all available data. Alternatively, a user indicates the data to access. The user configures the analysis by indicating the problem to be analyzed, such as the user indicating a cascade to relate cost to source. This input may indicate specific data to access, such as data likely to be used by machine learning to classify (1) the cost, fault, and/or source or to classify (2) the building, sub-system, and/or setting or device. In other embodiments, a specific problem is not indicated. Instead, the cascade is to be used to determine sources of any of various problems that may occur. The machine learning may indicate which variables and corresponding data correlate with the cascade outputs and which do not. Less than all of the originally selected data may be used for the trained cascade, such as just using the determinative variables.

In one embodiment, data is also accessed for classification other than the cascade. For example, data to machine train a predictor and/or data for unsupervised (e.g., clustering) machine learning is accessed.

The classifier is trained to output desired information, such as identify a source of fault and/or identify poor performing building automation systems 12. This may be used to limit the training of the cascade to particular building automation systems 12, parts, or faults. For example, clustering is used to distinguish good and poor performing building automation systems 12. Prediction is learned from data from the poor performing building automation systems 12. Data from the good performing buildings is not used. Alternatively, data from both sets of buildings is used, but used differently in learning to predict.

In act 52 for training a cascade, a building processor 16 of the building analytics system 17 applies machine learning to the accessed data. For training, some of the data is used as input to the learning and other of the data is used as a measure of performance or the ground truth. For example and as represented in Figure 10, some measurements 88 are used as the output of the classification. Other data of the input vector 80 are used to represent the variables that may lead to the output. For example, a measure of performance (e.g., energy usage, error, fault) is used as the ground truth for learning to predict the occurrence, reason, and source.

Outputs from other classification (e.g., clustering and/or CMAC) may be used as input data and/or as ground truth for learning.

The machine learning is a neural network, a CMAC neural network, back-propagation, or other machine learning for predicting from input data. The machine learning learns to statistically relate the input values to the ground truth. For a neural network, layers of nodes, weights for the nodes, and connections between the nodes are learned by the processor to classify from the input vector.

Using many examples from many buildings in the training, the machine learning may be more accurate. The many examples may make the machine learning more able to learn to predict given input values different than any of the training data.

In the cascade example, the accessed data is applied to a cascade of machine learning. For example, back-propagation machine learning is used to train one classifier 82A of heating, cooling, ventilation, and electricity costs or efficiency. Weather data, building data, and operating data are used to train the classifier 82A to predict the measured data or ground truth.

The same or different accessed data with or without the ground truth from the first classifier 82A is applied by the processor to further machine learning. Where the cascade identifies a problem corresponding with a particular sub-system or sub-systems, the operational data for those sub-systems is used. The further machine learning is for a classifier 82B to identify a fault associated with the cost or efficiency. For a cascade, the classifier 82B is trained to classify the fault from, in part, the predicted cost 86A of the input classifier 82A. For example, a CMAC is trained to classify the fault of a problem, such as the temperature or flow leading to a cost or efficiency problem.

The same or different accessed data with or without the ground truth from the fault classifier 82B is applied by the processor to further machine learning in another embodiment. The cost or efficiency may or may not also be used in the input vector 80C. Where the cascade identifies the problem and the fault of the problem, the further machine learning is for a classifier 82C to identify the source of the fault. For a cascade, the classifier 82C is trained to classify the source from, in part, the predicted fault 86B of the fault classifier 82B. For example, CMAC is trained to classify the source of the fault, such as a valve position, valve, sensor, sensor reading, device, or device operation of the building automation system causing the fault.

By training the multiple classifiers 82 with machine learning from the accessed data, a cascade of machine-learnt classifiers 82 is provided for the building analytics system. Any number of classifiers 82 with any relationship of outputs to inputs may be used. The training may or may not include prediction and corresponding error minimization between predicted and actual measures. Different or the same training and/or machine learning are used for the different classifiers in the cascade.

In act 54 of the learning, the building processor 16 of the analytics system 17 outputs results of the application of machine learning to a display 18, network, memory, or other processor. The cascade of machine-learnt classifiers 82 of the operation of the building automation systems 12 is output. For example, the learnt neural networks, such as in the form of matrices, for predicting a problem and source of the problem is output. As another example, the cascade system of three classifiers to identify a building as having increased cost, the fault causing the increased cost, and the source of the fault is output. More than one cascade may be output, such as outputting cascades trained to identify the sources of different problems. Alternative classifiers 82 for each layer of the cascade may be output.

The output cascade is used or applied. Later-acquired data or data from different building automation, relative to the training data, is input to the classifiers 82 of the cascade. The cascade identifies whether a building automation system 12 has a problem, the fault leading to the problem, and the source of the fault. The classification is based on the input data to each classifier, including information cascaded from another classifier. Figure 17 represents this application of the cascade (see Figure 11).

The same or different building processor 16 and/or building analytic system 17 apply the learnt cascade of classifiers 82. In other embodiments, a given building automation system 12 applies the cascade.

In act 50, the building analytics system 17, building processor 16, or other device of the building management system 8 accesses input data. The input data is from a given building automation system 12. Different building automation systems 12 are analyzed by the processor separately. Some of the same data may be used for different building automation systems 12, such as enterprise data associated with the different automation systems 12 or data output by other machine-learnt classification. Other data may be accessed, such as weather data, utility data, or building data.

The same type of data used to train is accessed. The type of data used for ground truth is not accessed as the machine-learnt classifier 82 classifies or predicts. In the example of Figure 11, the weather, building, operating, and cascaded information are accessed from memory, transmission, or receipt.

In act 52 of the application of the learned classifiers 82 of the cascade, the machine-learnt classifiers are used by the processor to predict or classify the building automation system 12 or part of the building automation system 12. The analytics system 17 or building processor 16 inputs the accessed data of the input vector 80 into the machine-learnt classifier 82. Based on the input data, the machine-learnt classifier 82 implemented by the processor outputs the class or prediction. For example, a cascade of two or more classifiers are applied to data for a given building automation system. One or more of the classifiers 82 are responsive to another of the classifiers 82 in the cascade. In the example of Figure 11, the classifier 82A (e.g., machine-learnt classifier using back-propagation) classifies a cost as not normal. The classifier 82B (e.g., CMAC) classifies a fault of the non-normal cost. The classifier 82C (e.g., CMAC) classifies a source of the fault. The classification from each classifier 82A-B but the last is fed forward to be used in classifying by downstream classifiers 82B-C of the cascade.

The machine-learnt classifier is applied by the processor to any building automation system 12. In one embodiment, the building automation system 12 to which the cascade is to be applied is identified with a different machine-learnt classifier. For example, clustering is used to identify poorly performing building automation systems 12. Any data, such as the same or different data, is used for this initial classification. Data from all or many building automation systems 12 is input to classify membership or cluster. The cascade is then applied to the building automation systems 12 with poor performance. The cascade determines the problem and source of the problem based on input data for the given building automation system 12.

In other embodiments, the cascade is applied to user selected, all, or other building automation systems 12.

In act 54 of the application of the machine-learnt classifiers 82 in the cascade, the problem, fault, source, sub-system, building, device, sensor reading, setting, control or other classification from the cascade is presented by the processor on the display 18 of the building analytics system 17. The output may be instead transmitted and output on another device, such as printed or displayed remotely. Any results are output. Alternatively, information derived from the results is output, such as a list of buildings with similar problems, faults, and/or sources. Probability information may be output, such as providing a range of values for an output (e.g., range of costs and corresponding probability distribution in the prediction). The training of the classifiers may be probabilistic, so the machine-learnt classifier outputs probability information for each output value.

The output may be used to fix problems. For example, heating cost for a building with heating cost problems is reduced. The source of the problem is used to indicate the solution, such as fixing or replacing a damper or valve. The output may be used to identify commonality for altering design. The output may be used to alter operation of the enterprise 10, such as relocating employees to buildings or zones with proper performing building automation. The output may be used to initiate analysis by a technician in an effort to identify a control problem. While the invention has been described above by reference to various embodiments, it should be understood that many changes and modifications can be made without departing from the scope of the invention. It is therefore intended that the foregoing detailed description be regarded as illustrative rather than limiting, and that it be understood that it is the following claims, including all equivalents, that are intended to define the scope of this invention.

## Claims

1. A method of building automation with cascaded learning in a building management system, the method comprising:
accessing (50) first data related to a plurality of buildings by a building analytics system of the building management system, the first data including building management system data and enterprise data different than building management system data, the enterprise data for an enterprise associated with the buildings of the plurality and the building management system data being for the buildings of the plurality;
applying (52), by the building analytics system, the first data to a first machine learning for identifying cost information;
applying (52), by the building analytics system, the first data to a second machine learning for identifying a fault associated with the cost information;
applying (52), by the building analytics system, the first data to a third machine learning for identifying a source of the fault;
the method being **characterised in that** it comprises the step of:
outputting (54), as a result of the applying (52), a cascade system comprising a cascade of first, second, and third machine-learnt classifiers from the first, second, and third learning,
wherein one or more classifiers of the cascade uses the output from another classifier of the cascade in a cascade arrangement.

2. The method of claim 1 wherein accessing (50) the enterprise data comprises accessing (50) budget, maintenance, employee complaint, or human resources data of the enterprise.

3. The method of claim 1 wherein accessing (50) the building management system data comprises accessing (50) heating, cooling, ventilation, electricity, fire safety, or combinations thereof data.

4. The method of claim 1 wherein applying (52) to the first machine learning comprises applying (52) to a back-propagation machine learning with the cost information comprising heating, cooling, ventilation, and electricity cost.

5. The method of claim 4 wherein the first data comprises weather data, building data, and operating data.

6. The method of claim 1 wherein applying (52) to the second machine learning comprises applying (52) to a cerebellar model arithmetic computer neural network with the fault comprising temperature and flow.

7. The method of claim 6 wherein the first data comprises the cost information and data from sub-systems of a building automation system.

8. The method of claim 1 wherein applying (52) to the third machine learning comprises applying (52) to a cerebellar model arithmetic computer neural network with the source comprising a valve position, a sensor value, or operation of a device of the building automation system.

9. The method of claim 8 wherein the first data comprises the fault.

10. The method of claim 1 wherein outputting (54) comprises outputting (54) the cascade system for identifying the source in sequence by identifying a building as having increased cost, the fault causing the increased cost, and the source from the fault.

11. The method of claim 1 further comprising applying the cascade system to later-acquired second data for each of a plurality of building automation systems.

12. A building management system for building automation fault detection, the system comprising:
a building automation system (12) for heating, ventilation, and air conditioning, the building automation system (12) being for a building and configured to output operational data;
a building processor (16) configured to apply the operational data to a cascade of first and second machine-learnt classifiers, the first machine-learnt classifier configured to identify a fault in the building automation system (12) and the second machine-learnt classifier configured to identify a source of the fault, the first and second machine-learnt classifiers of the cascade trained from building automation systems of multiple other buildings, wherein the second machine-learnt classifier is configured to use the output from the first machine-learnt identifier in a cascade arrangement; and
a display (18) configured to output the source.

13. The building management system of claim 12 wherein the building processor (16) is configured to apply the cascade to the operational data of each of the building automation systems (12).

14. The building management system of claim 12 wherein the first machine-learnt classifier comprises a cerebellar model arithmetic computer neural network.

15. The building management system of claim 12 wherein an input vector for the first machine-learnt classifier comprises a cost and the operational data for one or more sub-systems of the building automation system, and wherein an input vector for the second machine-learnt classifier comprises fault information for the fault, or wherein the cascade comprises a third machine-learnt classifier, the third machine-learnt classifier configured to identify the building automation system (12) as having higher cost relative to a group of building automations systems (12), the first machine-learnt classifier including the cost in an input vector.

## Patentansprüche

1. Verfahren zur Gebäudeautomation mit kaskadiertem Lernen in einem Gebäudemanagementsystem, wobei das Verfahren Folgendes umfasst:
Zugreifen (50) auf erste Daten, die auf eine Vielzahl von Gebäuden bezogen sind, durch ein Gebäudeanalytiksystem des Gebäudemanagementsystems, wobei die ersten Daten Gebäudemanagementsystemdaten und Unternehmensdaten, die sich von Gebäudemanagementsystemdaten unterscheiden, enthalten, wobei die Unternehmensdaten für ein mit den Gebäuden aus der Vielzahl assoziiertes Unternehmen sind und die Gebäudemanagementsystemdaten für die Gebäude aus der Vielzahl sind;
Anwenden (52) der ersten Daten durch das Gebäudeanalytiksystem auf ein erstes maschinelles Lernen zum Identifizieren von Kosteninformationen;
Anwenden (52) der ersten Daten durch das Gebäudeanalytiksystem auf ein zweites maschinelles Lernen zum Identifizieren einer mit den Kosteninformationen assoziierten Störung;
Anwenden (52) der ersten Daten durch das Gebäudeanalytiksystem auf ein drittes maschinelles Lernen zum Identifizieren eines Ursprungs der Störung;
wobei das Verfahren **dadurch gekennzeichnet ist, dass** es folgenden Schritt umfasst:
Ausgeben (54) eines Kaskadensystems, das eine Kaskade aus einem ersten, einem zweiten und einem dritten maschinengelernten Klassifikator aus dem ersten, dem zweiten und dem dritten maschinellen Lernen umfasst, als Folge des Anwendens (52),
wobei ein oder mehrere Klassifikatoren der Kaskade die Ausgabe aus einem anderen Klassifikator der Kaskade in einer Kaskadenanordnung nutzt/nutzen.

2. Verfahren nach Anspruch 1, wobei das Zugreifen (50) auf die Unternehmensdaten Zugreifen (50) auf Budget-, Wartungs-, Mitarbeiterbeschwerde- oder Personaldaten des Unternehmens umfasst.

3. Verfahren nach Anspruch 1, wobei das Zugreifen (50) auf die Gebäudemanagementsystemdaten Zugreifen (50) auf Heizungs-, Kühlungs-, Lüftungs-, Strom- oder Brandsicherheitsdaten oder Kombinationen aus diesen Daten umfasst.

4. Verfahren nach Anspruch 1, wobei das Anwenden (52) auf das erste maschinelle Lernen Anwenden (52) auf ein maschinelles Lernen mit Backpropagation umfasst und die Kosteninformationen Heizungs-, Kühlungs-, Lüftungs- und Stromkosten umfassen.

5. Verfahren nach Anspruch 4, wobei die ersten Daten Wetterdaten, Gebäudedaten und Betriebsdaten umfassen.

6. Verfahren nach Anspruch 1, wobei das Anwenden (52) auf das zweite maschinelle Lernen Anwenden (52) auf ein neuronales Cerebellar-Model-Arithmetic-Computer-Netz umfasst und die Störung eine Temperatur und einen Durchfluss umfasst.

7. Verfahren nach Anspruch 6, wobei die ersten Daten die Kosteninformationen und Daten aus Untersystemen eines Gebäudeautomationssystems umfassen.

8. Verfahren nach Anspruch 1, wobei das Anwenden (52) auf das dritte maschinelle Lernen Anwenden (52) auf ein neuronales Cerebellar-Model-Arithmetic-Computer-Netz umfasst und der Ursprung eine Ventilstellung, einen Sensorwert oder den Betrieb eines Bauelements des Gebäudeautomationssystems umfasst.

9. Verfahren nach Anspruch 8, wobei die ersten Daten die Störung umfassen.

10. Verfahren nach Anspruch 1, wobei das Ausgeben (54) Ausgeben (54) des Kaskadensystems zum Identifizieren des Ursprungs in einer Abfolge durch Identifizieren eines Gebäudes, das erhöhte Kosten aufweist, der Störung, die die erhöhten Kosten verursacht, und des Ursprungs mittels der Störung umfasst.

11. Verfahren nach Anspruch 1, das ferner Anwenden des Kaskadensystems auf später erfasste zweite Daten für jedes aus einer Vielzahl von Gebäudeautomationssystemen umfasst.

12. Gebäudemanagementsystem zur Gebäudeautomationsstörungserkennung, wobei das System Folgendes umfasst:
ein Gebäudeautomationssystem (12) für Heizung, Lüftung und Klimatisierung, wobei das Gebäudeautomationssystem (12) für ein Gebäude ist und konfiguriert ist, um Betriebsdaten auszugeben;
einen Gebäudeprozessor (16), der konfiguriert ist, um die Betriebsdaten auf eine Kaskade aus einem ersten und einem zweiten maschinengelernten Klassifikator anzuwenden, wobei der erste maschinengelernte Klassifikator konfiguriert ist, um eine Störung im Gebäudeautomationssystem (12) zu identifizieren, und der zweite maschinengelernte Klassifikator konfiguriert ist, um einen Ursprung der Störung zu identifizieren, wobei der erste und der zweite maschinengelernte Klassifikator der Kaskade mittels Gebäudeautomationssystemen mehrerer anderer Gebäude trainiert werden, wobei der zweite maschinengelernte Klassifikator konfiguriert ist, um die Ausgabe aus dem ersten maschinengelernten Identifikator in einer Kaskadenanordnung zu nutzen; und
ein Display (18), das konfiguriert ist, um den Ursprung auszugeben.

13. Gebäudemanagementsystem nach Anspruch 12, wobei der Gebäudeprozessor (16) konfiguriert ist, um die Kaskade auf die Betriebsdaten jedes der Gebäudeautomationssysteme (12) anzuwenden.

14. Gebäudemanagementsystem nach Anspruch 12, wobei der erste maschinengelernte Klassifikator ein neuronales Cerebellar-Model-Arithmetic-Computer-Netz umfasst.

15. Gebäudemanagementsystem nach Anspruch 12, wobei ein Eingangsvektor für den ersten maschinengelernten Klassifikator Kosten und die Betriebsdaten für ein oder mehrere Untersysteme des Gebäudeautomationssystems umfasst und wobei ein Eingangsvektor für den zweiten maschinengelernten Klassifikator Störungsinformationen für die Störung umfasst oder wobei die Kaskade einen dritten maschinengelernten Klassifikator umfasst, wobei der dritte maschinengelernte Klassifikator konfiguriert ist, um zu identifizieren, dass das Gebäudeautomationssystem (12) im Verhältnis zu einer Gruppe von Gebäudeautomationssystemen (12) höhere Kosten aufweist, wobei der erste maschinengelernte Klassifikator die Kosten in einem Eingangsvektor enthält.

## Revendications

1. Procédé d'immotique avec apprentissage en cascade dans un système de gestion de bâtiment, le procédé comprenant les étapes suivantes :
accéder (50) à des premières données relatives à une pluralité de bâtiments par un système d'analyse de bâtiment du système de gestion de bâtiment, les premières données comprenant des données de système de gestion de bâtiment et des données d'entreprise différentes des données de système de gestion de bâtiment, les données d'entreprise concernant une entreprise associée aux bâtiments de la pluralité et les données de système de gestion de bâtiment concernant les bâtiments de la pluralité ;
appliquer (52), par le système d'analyse de bâtiment, les premières données à un premier apprentissage machine pour identifier des informations de coûts ;
appliquer (52), par le système d'analyse de bâtiment, les premières données à un deuxième apprentissage machine pour identifier une erreur associée aux informations de coûts ;
appliquer (52), par le système d'analyse de bâtiment, les premières données à un troisième apprentissage machine pour identifier la source du défaut ;
le procédé étant **caractérisé en ce qu'**il comprend l'étape suivante :
délivrer en sortie (54), en conséquence de l'application (52), un système en cascade comprenant une cascade de premier, deuxième et troisième classificateurs d'apprentissage machine à partir des premier, deuxième et troisième apprentissages,
où un ou plusieurs classificateurs de la cascade utilisent la sortie d'un autre classificateur de la cascade dans un arrangement en cascade.

2. Procédé selon la revendication 1, dans lequel l'accès (50) aux données d'entreprise comprend l'accès (50) aux données de budget, aux données de maintenance, aux données de plaintes des employés ou aux données des ressources humaines de l'entreprise.

3. Procédé selon la revendication 1, dans lequel l'accès (50) aux données de système de gestion de bâtiment comprend l'accès (50) aux données de chauffage, aux données de refroidissement, aux données de ventilation, aux données électriques, aux données de sécurité incendie ou à des combinaisons de ces données.

4. Procédé selon la revendication 1, dans lequel l'application (52) au premier apprentissage machine comprend l'application (52) à un apprentissage machine à rétropropagation avec les informations de coût comprenant les coûts du chauffage, du refroidissement, de la ventilation et de l'électricité.

5. Procédé selon la revendication 4, dans lequel les premières données comprennent des données météorologiques, des données de construction et des données d'exploitation.

6. Procédé selon la revendication 1, dans lequel l'application (52) au deuxième apprentissage machine comprend l'application (52) à un réseau neuronal informatique arithmétique de modèle cérébelleux, avec le défaut comprenant la température et le flux.

7. Procédé selon la revendication 6, dans lequel les premières données comprennent les informations de coûts et des données de sous-systèmes d'un système d'immotique.

8. Procédé selon la revendication 1, dans lequel l'application (52) au troisième apprentissage machine comprend l'application (52) à un réseau neuronal informatique arithmétique de modèle cérébelleux, avec la source comprenant une position de vanne, une valeur de capteur ou le fonctionnement d'un dispositif du système d'immotique.

9. Procédé selon la revendication 8, dans lequel les premières données comprennent le défaut.

10. Procédé selon la revendication 1, dans lequel la sortie (54) comprend la sortie (54) du système en cascade pour identifier la source en séquence en identifiant un bâtiment comme ayant un coût accru, le défaut causant le coût accru, et la source à partir du défaut.

11. Procédé selon la revendication 1, comprenant en outre l'application du système en cascade à des secondes données acquises ultérieurement pour chacun d'une pluralité de systèmes d'immotique.

12. Système de gestion de bâtiment pour la détection de défauts d'immotique, le système comprenant :
un système d'immotique (12) pour le chauffage, la ventilation et la climatisation, le système d'immotique (12) étant destiné à un bâtiment et configuré pour produire des données opérationnelles ;
un processeur de bâtiment (16), configuré pour appliquer les données opérationnelles à une cascade d'un premier et d'un deuxième classificateurs d'apprentissage machine, le premier classificateur d'apprentissage machine étant configuré pour identifier un défaut dans le système d'immotique (12) et le deuxième classificateur d'apprentissage machine étant configuré pour identifier la source du défaut, les premier et deuxième classificateurs d'apprentissage machine de la cascade étant formé à partir de systèmes d'immotique de plusieurs autres bâtiments, où le deuxième classificateur d'apprentissage machine est configuré pour utiliser la sortie du premier identificateur d'apprentissage machine dans un arrangement en cascade ; et
un affichage (18) configuré pour sortir la source.

13. Système de gestion de bâtiment selon la revendication 12, dans lequel le processeur du bâtiment (16) est configuré pour appliquer la cascade aux données opérationnelles de chacun des systèmes d'immotique (12).

14. Système de gestion de bâtiment selon la revendication 12, dans lequel le premier classificateur d'apprentissage machine comprend un réseau neuronal informatique arithmétique de modèle cérébelleux.

15. Système de gestion de bâtiment selon la revendication 12, dans lequel un vecteur d'entrée pour le premier classificateur d'apprentissage machine comprend un coût et les données opérationnelles pour les un ou plusieurs sous-systèmes du système d'immotique, et dans lequel un vecteur d'entrée pour le deuxième classificateur d'apprentissage machine comprend des informations de défaut pour le défaut, ou dans lequel la cascade comprend un troisième classificateur d'apprentissage machine, le troisième classificateur d'apprentissage machine étant configuré pour identifier le système d'immotique (12) comme ayant un coût plus élevé par rapport à un groupe de systèmes d'immotique (12), le premier classificateur d'apprentissage machine incluant le coût dans un vecteur d'entrée.
